# EUROPEAN PATENT SPECIFICATION

(11) **EP 2 932 737 B1**
(45) Date of publication and mention of the grant of the patent: **27.05.2020**
(21) Application number: 13863116.3
(22) Date of filing: 16.12.2013
(51) Int. Cl.: H04L 12/24, H04L 12/801, H04L 12/911, H04W 72/08

(54) **SERVICE PROVISIONING USING ABSTRACTED NETWORK RESOURCE REQUIREMENTS**
DIENSTBEREITSTELLUNG MITHILFE ABSTRAHIERTER NETZWERKRESSOURCENANFORDERUNGEN
PRESTATION DE SERVICE NÉCESSITANT DES RESSOURCES DE RÉSEAU ABSTRAITES

(30) Priority: 14.12.2012 US 201261737551 P
(43) Date of publication of application: 21.10.2015
(73) Proprietor: Huawei Technologies Co., Ltd., Longgang District Shenzhen, Guangdong 518129 (CN)
(72) Inventor: SENARATH, Nimal Gamini, Ottawa, Ontario K2G 6P5 (CA); CHENG, Ho Ting, Stittsville, Ontario K2S 0S9 (CA); ZHANG, Hang, Nepean, Ontario K2G 5Z1 (CA); STEPHENNE, Alex, Stittsville, Ontario K2S 2H3 (CA)
(74) Representative: Epping - Hermann - Fischer
(86) International application number: PCT/US2013/075480
(87) International publication number: WO 2014/093977

(56) References cited:
- WO-A1-2012/059130
- US-A1- 2006 083 205
- US-A1- 2009 141 694
- US-A1- 2010 183 025
- US-A1- 2012 057 456
- US-A1- 2012 115 467

## Description

### TECHNICAL FIELD

The present invention relates generally to communications, and more specifically, to methods and systems for service provisioning using abstracted network resource requirements.

### BACKGROUND

US 2012/0057456 A1 relates to a method and apparatus for a wireless device comprising means for receiving first packets of an IP flow utilizing a wireless link to a cellular base station or a Wi-Fi access point during a first time interval; means for receiving second packets of an IP flow utilizing a wireless link to another wireless device during the first time interval; and means for recovering the IP flow utilizing the first and second packets.

Network operators are tasked with equitably distributing finite shared resources (e.g., bandwidth, etc.) amongst multiple users in a manner that satisfies the users' collective quality of service (QoS) requirements. Conventional techniques allocate network resources in an *ad hoc* manner (e.g., on a case-by-case basis), which satisfies QoS requirements at the expense of overall resource utilization efficiency. For example, in wireless environments, spectrum bandwidth may be allocated to satisfy an individual service request without considering how interference resulting from increased traffic load will reduce spectral efficiency over nearby interferences. Accordingly, mechanisms and techniques for more efficiently allocating resources in a network are needed in order to satisfy ever increasing demands of next generation networks.

### SUMMARY OF THE INVENTION

Technical advantages are generally achieved, by embodiments of this disclosure which describe methods and systems for service provisioning using abstracted network resource requirements.

In accordance with an embodiment, a method for providing a resource cost database for a wireless network based on wireless network virtualization is provided. In this example, the method includes identifying virtual links in a wireless network, obtaining resource cost data of the wireless network for modeling interference-load dependencies between the virtual links in the wireless network, and generating a resource cost database for resource provisioning based on wireless network virtualization in accordance with the resource cost data. The virtual links include at least a first virtual link corresponding to a first radio interface and a second virtual link corresponding to a second radio interface. The first radio interface and the second radio interface are available for carrying traffic in the wireless network. The resource cost database specifies an interference cost on the first virtual link as a function of loading on the second virtual link. The resource cost database is configured to be used for provisioning resources in the wireless network. The interference cost corresponds to a reduction in spectral efficiency on the first virtual link as a result of a traffic load carried over the second virtual link. An apparatus for performing this method is also provided.

In accordance with another embodiment, a method for provisioning resources in a wireless network based on wireless network virtualization is provided. In this example, the method includes obtaining a resource cost database for a wireless network, and gathering network loading information for the wireless network. The network loading information corresponds to an initial interval. The resource cost database is generated in accordance with resource cost data of the wireless network obtained for modeling interference-load dependencies between the virtual links in the wireless network. The resource cost database specifies an interference cost on a first virtual link as a function of loading on a second virtual link. The interference cost corresponds to a reduction in spectral efficiency on the first virtual link as a result of a traffic load carried over the second virtual link. The first virtual link corresponds to a first radio interface and the second virtual link corresponds to a second radio interface. The first radio interface and the second radio interface are available for carrying traffic in the wireless network. The method further includes provisioning network resources for a subsequent interval in accordance with the network loading information and the resource cost database. An apparatus for performing this method is also provided.

### BRIEF DESCRIPTION OF THE DRAWINGS

For a more complete understanding of the present invention, and the advantages thereof, reference is now made to the following descriptions taken in conjunction with the accompanying drawing, in which:
FIG. 1 illustrates a diagram of an embodiment wireless communications network;
FIG. 2 illustrates a diagram of another embodiment wireless communications network;
FIG. 3 illustrates a diagram of yet another embodiment wireless communications network;
FIG. 4 illustrates a diagram of yet another embodiment wireless communications network;
FIG. 5 illustrates a diagram of yet another embodiment wireless communications network;
FIG. 6 illustrates a flowchart of an embodiment method for performing admission control;
FIG. 7 illustrates a flowchart of an embodiment method for performing path selection;
FIG. 8 illustrates a diagram of yet another embodiment communications network;
FIG. 9 illustrates a diagram of an embodiment network architecture;
FIG. 10 illustrates a diagram of another embodiment network architecture;
FIG. 11 illustrates a diagram of yet another embodiment network architecture;
FIG. 12 illustrates a diagram of yet another embodiment network architecture;
FIG. 13 illustrates a diagram of an embodiment communications sequence;
FIG. 14 illustrates a flowchart of an embodiment method for performing admission control and path selection;
FIG. 15 illustrates a diagram of yet another embodiment network architecture;
FIG. 16 illustrates a diagram of yet another embodiment network architecture;
FIG. 17 illustrates a diagram of yet another embodiment network architecture;
FIG. 18 illustrates a diagram of yet another embodiment network architecture;
FIG. 19 illustrates a diagram of yet another embodiment network architecture;
FIG. 20 illustrates a diagram of yet another embodiment network architecture;
FIG. 21 illustrates a diagram of an embodiment admission controller;
FIG. 22 illustrates a diagram of an embodiment admission control system;
FIG. 23 illustrates a diagram of another embodiment admission control system;
FIG. 24 illustrates a diagram of yet another embodiment admission control system;
FIG. 25 illustrates a diagram of yet another embodiment admission control system;
FIG. 26 illustrates a diagram of yet another embodiment wireless communications network;
FIG. 27 illustrates a diagram of an embodiment resource cost database portion;
FIG. 28 illustrates a diagram of yet another embodiment wireless communications network;
FIGS. 29-30 illustrate diagrams of additional embodiment resource cost database portions;
FIG. 31 illustrates a block diagram of an embodiment of a communications device; and
FIG. 32 illustrates a block diagram of an embodiment processing system.

### DETAILED DESCRIPTION OF ILLUSTRATIVE EXAMPLES

The making and using of examples of this disclosure are discussed in detail below. It should be appreciated, however, that the present invention provides many applicable inventive concepts that can be embodied in a wide variety of specific contexts. The specific examples discussed are merely illustrative of specific ways to make and use the invention, and do not limit the scope of the invention.

Aspects of this disclosure provide techniques for modeling interference costs on virtual radio interfaces as a function of loading in a wireless network. More specifically, spectral efficiency on a given radio interface may be substantially affected by interference produced from traffic communicated over nearby interfaces. This reduction in spectral efficiency may represent a cost, which can be modeled as a function of traffic loading on the surrounding radio interfaces. The cost functions can be developed from resource cost data obtained from the wireless network, such as historical interference data, spectral efficiency data, and/or loading data for various links/APs over a period of time (e.g., a month, a year, etc.). This resource cost data can be analyzed and/or consolidated to obtain a resource cost database that models spectral efficiency/interference-costs in the network as a function of loading on the various links. The resource cost database can be used, in conjunction with dynamic loading data, to improve resource provisioning efficiency. For example, the resource cost database may be used to predict the net change in network interference/spectral-efficiency that would result from a provisioning decision prior to approving a service request or performing path selection.

The resource cost database can also be used by network operators (NTOs) to dynamically set or adjust network resource pricing. More specifically, next generation networks may distribute network resources using a marketplace architecture in which virtual or physical resources are offered for sale at prices that vary with supply and demand. For example, pricing for wireless spectrum bandwidth (virtual or otherwise) may be adjusted based on resource availability (or on average spectral-efficiency-perresource-unit), which can be estimated using the resource cost database. These and other aspects are explained in greater detail below.

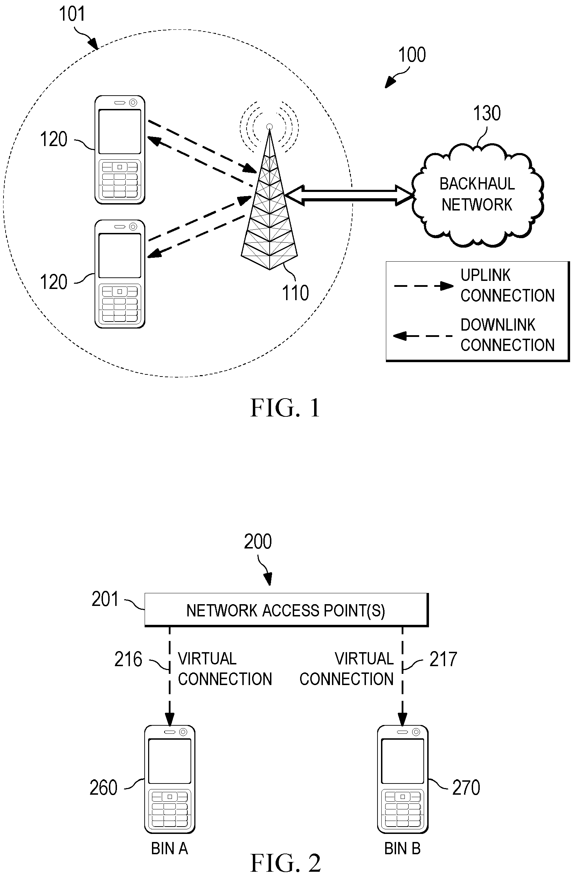

FIG. 1 illustrates a network 100 for communicating data. The network 100 comprises an access point (AP) 110 having a coverage area 101, a plurality of stations (STAs) 120, and a backhaul network 130. The AP 110 may comprise any component capable of providing wireless access by, *inter alia,* establishing uplink (dashed line) and/or downlink (dotted line) connections with the STAs 120, such as a base station, an enhanced base station (eNB), a femtocell, and other wirelessly enabled devices. The STAs 120 may comprise any component capable of establishing a wireless connection with the AP 110. The backhaul network 130 may be any component or collection of components that allow data to be exchanged between the AP 110 and a remote end (not shown). In some embodiments, the network 100 may comprise various other wireless devices, such as relays, femtocells, etc.

Aspects of this disclosure model interference on virtual radio interfaces as a function of loading on nearby radio interfaces. FIG. 2 illustrates a wireless network 200 comprising network access point(s) (APs) 201 that service a geographical area including BIN A and BIN B. The wireless network AP(s) 201 are configured to provide wireless access in BIN A and BIN B using virtual radio interfaces 216 and 217, respectively. For purposes of this disclosure, the term virtual radio interface refers to radio interfaces that are established or capable of being established in a wireless network. For example, the virtual radio interface 216 may correspond to a link that is not yet established, but would otherwise be available for transporting service flows in the network 200. The virtual radio interface 216 may also refer to a link that is currently transporting service flows.

An interference component on the virtual radio interface 217 can be modeled as a function of loading on the virtual radio interface 216. This modeling can be based on historical information (e.g., traffic patterns, resource assignments, interference, etc.) of the network 200. For instance, historical information may be analyzed to determine a correlation between interference on the virtual radio interface 217 and loading on the virtual radio interface 216. Such correlations may include components for other traffic parameters as well, e.g., traffic type, etc.

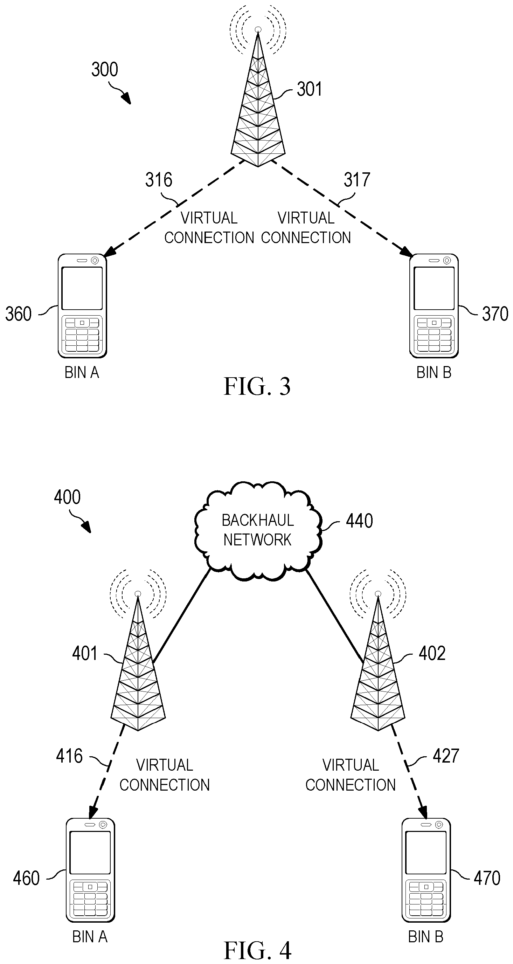

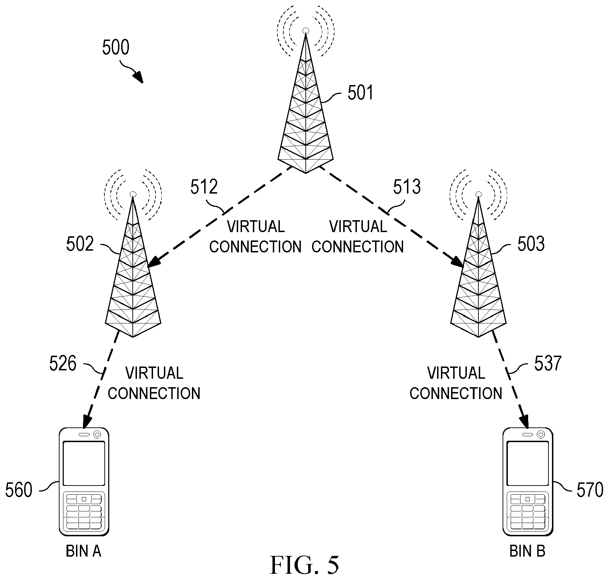

Interference-load dependencies can be modeled between virtual radio interfaces associated with the same AP. FIG. 3 illustrates a wireless network 300 in which load dependencies are modeled for wireless links 316, 317 associated with a single AP 301. Interference-load dependencies can also be modeled between virtual radio interfaces associated with different APs. FIG. 4 illustrates a wireless network 400 in which load dependencies are modeled for wireless links 416, 427 associated with APs 401, 402, respectively. Interference-load dependencies can also be modeled between virtual radio interfaces in wireless mesh networks. FIG. 5 illustrates a wireless mesh network 500 in which load dependencies are modeled for virtual radio interfaces 512, 513, 526, and 537. Notably, the virtual radio interfaces 512 and 513 interconnect the AP 501 to the APs 502 and 503, respectively, while the virtual radio interfaces 526 and 537 interconnect the APs 502 and 503 with the mobile stations 560 and 570, respectively. Interference-load dependencies may be modeled between all the virtual radio interfaces 512, 513, 526, and 537 in the wireless mesh network 500. For example, interference on the virtual radio interface 512 may be modeled as a function of loading on each of the virtual radio interfaces 513, 526, and 537.

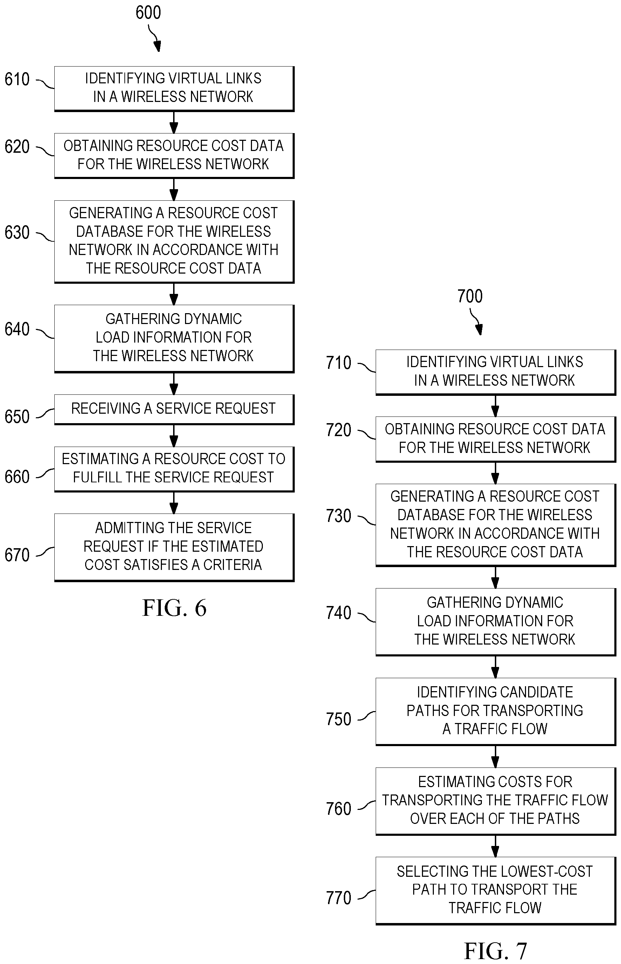

Aspects of this disclosure provide techniques for creating cumulative resource cost databases that model interference-load dependencies in a wireless network, and for using the cumulative resource cost databases to provision resources. For example, a cumulative resource cost database may be used when performing admission control. FIG. 6 illustrates an embodiment method 600 for performing admission control in accordance with a resource cost database, as may be performed by a network device (e.g., central entity, NTO, etc.). As shown, the method 600 begins with step 610, where the network device identifies virtual links in a wireless network. The virtual links may correspond to radio interfaces available for carrying traffic flows in the wireless network. Subsequently, the method 600 proceeds to step 620, where the network device obtains resource cost data for the wireless network. Thereafter, the method 600 proceeds to step 630, where the network device generates a resource cost database for the wireless network in accordance with the resource cost data. In one embodiment, the resource cost database specifies interference costs in the network as a function of loading on the virtual links. In another embodiment, the resource cost database specifies a spectral efficiency for each of the virtual links as a function of loading and/or interference in the network. Next, the method 600 proceeds to step 640, with the network device gathers dynamic load information for the wireless network. Dynamic load information may specify current loading on radio interfaces in the wireless network, as well as current interference information. Next, the method 600 proceeds to step 650, where the network device receives a service request. The service request may request transportation of a traffic flow to a user device at a specific location in the wireless network e.g., a BIN or geographical region. Thereafter, the method 600 proceeds to step 660, where the network device estimates a resource cost to fulfill the service request. In an embodiment, the resource cost corresponds to a reduction in resource availability of the network as a result of admitting the service request, and may include a direct cost component and an indirect cost component. The direct cost component may correspond to an amount of resources used to directly transport the service flow over a path. The indirect component may correspond to a reduction in spectral efficiency in the network (e.g., reduced bandwidth on neighboring radio interfaces) as a result of interference produced when transporting the service flow over the path. In another embodiment, the resource cost may correspond to a price or value to be paid for reserving (or otherwise using) the resources needed to satisfy the service request, which may fluctuate based on supply and demand. Accordingly, the price for each additional resource unit may increase as network loading increases, e.g., as resource availability decreases. In some embodiments, resource pricing may be negotiated between the user and the network operator, or by an intermediary, e.g., a telephone network service provider, etc. In other embodiments, resource pricing may be set according to a function/formula.

Next, the method 600 proceeds to step 670, where the network device admits the service request if the estimated cost satisfies a criteria. In one example, the estimated cost satisfies the criteria when the cost is below a threshold. In another example, the estimated cost satisfies the criteria when the service request can be admitted without affecting the network's ability to satisfy existing users' quality of service (QoS) requirements.

Cumulative resource cost databases can also be used during path selection. FIG. 7 illustrates an embodiment method 700 for using a resource cost database to perform path selection, as may be performed by a network device (e.g., central entity, NTO, etc.). As shown, the method 700 begins with steps 710-740, where the network device builds a resource cost database for the wireless network and gathers dynamic load information for the wireless network. Thereafter, the method 700 proceeds to step 750, where the network device identifies candidate paths for transporting a traffic flow. The candidate paths may be paths capable of satisfying quality of service requirements of the traffic flow. Thereafter, the method 700 proceeds to step 760, where the network device estimates a cost for transporting the traffic flow over each of the paths. The cost for transporting the traffic flow over the path may include a cost component for each link in the path. The cost components can be computed using the resource cost database in conjunction with current network load data. The cost components may then be summed to obtain the cumulative cost for the path. Next, the method 700 proceeds to step 770, where the network device selects the lowest cost path to transport the traffic flow.

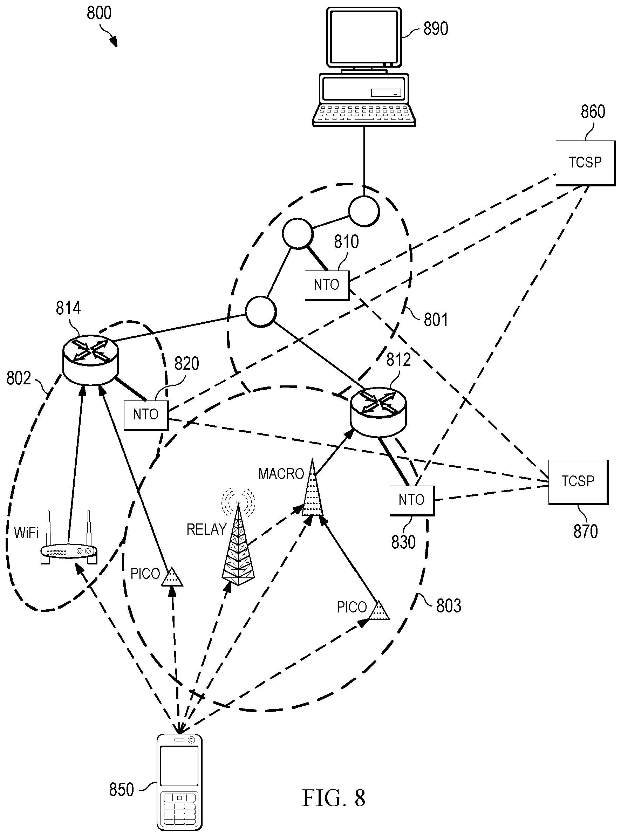

Embodiment techniques may be performed, or otherwise facilitated, by central entities, such as telecommunications service providers (TCSPs). FIG. 8 illustrates a network 800 in which central entities 860, 870 interact with NTOs 810, 820, 830 to model interference-load dependencies for access networks 801-803. The central entities may also perform or facilitate resource provisioning for traffic flows communicated between the mobile station 850 and the content provider 890. As shown, the NTO 810 operates a core network 801, and the NTOs 820, 830 operate access networks 802, 803. The core network 801 may be any type of network capable of interconnecting the access networks 802, 803 with one another and/or with the content provider 890. In some embodiments, the access network 802 corresponds to a wireless local area network (WLAN) serviced by a Wi-Fi access point (AP), and the access network 803 corresponds to a radio access network (RAN) serviced by one or more network APs, e.g., macro base stations (BSs), pico BSs, relays, etc. Interactions between the core network 801 and the access networks 802, 803 may be handled by edge routers 812, 813.

The central entities 860, 870 may coordinate the modeling of model interference-load dependencies between the networks 802 and 803. In one example, the central entity 870 may build a resource cost database for the networks 802, 803 by retrieving resource cost information from the NTOs 820, 830, and developing correlations and/or functional relationships between interference and loading on virtual wireless links in the networks 802, 803. Additionally, the central entity 870 may provision resources directly by collecting dynamic loading information from the networks 802, 803, and using the loading information to estimate spectral efficiency in the network under different allocation plans. Alternatively, the central entity 870 may indirectly provision resources in the network by distributing the resource cost database to the NTOs 820, 830 so that spectral efficiency evaluations may be performed locally.

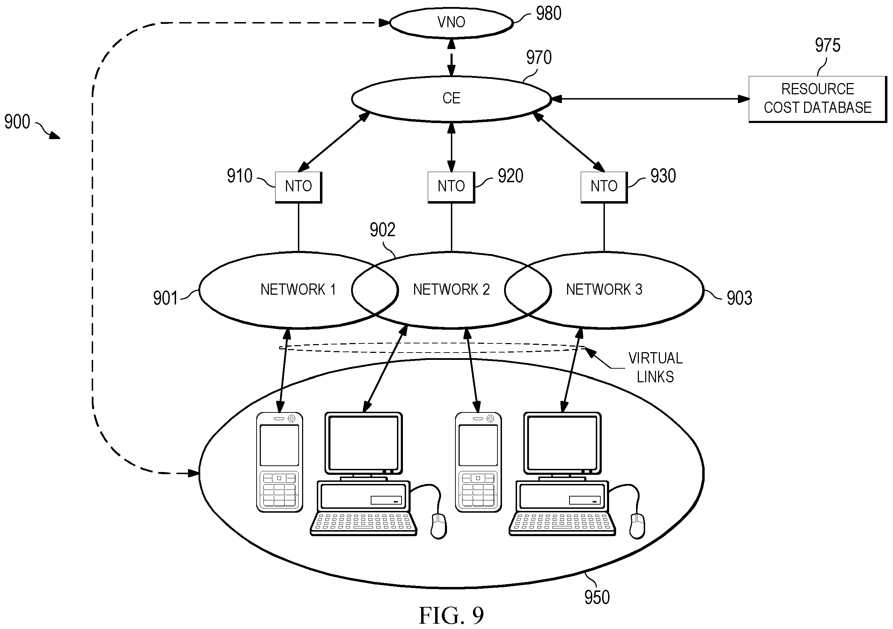

Resource cost databases can be used to model virtual links in neighboring wireless access networks. FIG. 9 illustrates a network architecture 900 in which a virtual network operator (VNO) 980 models virtual links in networks 901-903. More specifically, the VNO 980 may control a central entity 970, which may be used to retrieve resource cost data for the networks 901-903 from the NTOs 910-920, and to build a resource cost database 975 based on the retrieved resource cost data.

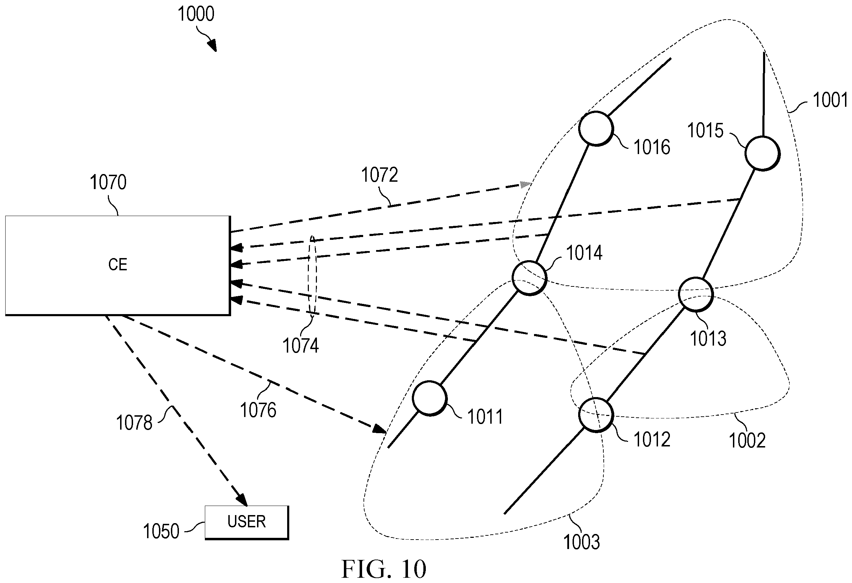

Resource cost databases can also be used to provision resources in a wireless network based on dynamic network information (e.g., loading information, etc.). FIG. 10 illustrates a network architecture 1000 which a central entity 1010 performs resource provisioning in network segments 1001, 1002, and 1003 in view of a service request received from a user 1050. The central entity sends a request 1072 to the networks devices 1011-1016 to request loading information for the network segments 1001, 1002, and 1003. The devices 1011-1016 return response messages 1074 to the central entity 1070, which include loading information for the network segments 1001, 1002, and 1003. The central entity 1070 uses the network cost data to make provisioning decisions, which are distributed to the users 1050 and network devices 1011-1016 via provisioning instructions 1076, 1078. The provisioning decisions may relate to admission and/or path selection. In some embodiments, the central entity 1070 requests new cost information each time a new service request is received. In other embodiments, the central entity 1070 periodically, e.g., every second, every five seconds, during the course of network operation.

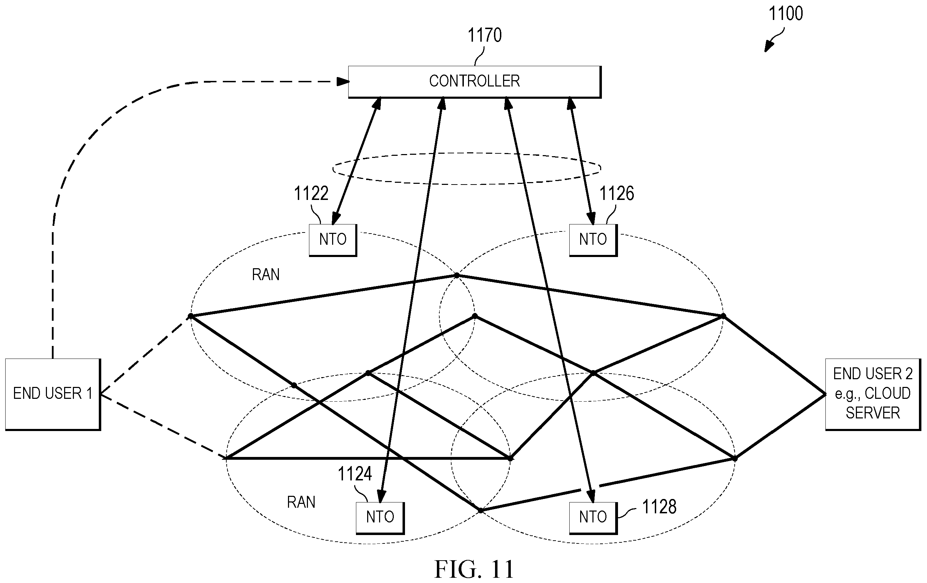

Central controllers can interact with NTOs to facilitate provisioning (e.g., admission, resource allocation, link reservation, etc.) in wireless and/or wireline networks. FIG. 11 illustrates an embodiment network 1100 comprising a controller 1170 configured to interact which NTOs 1122-1128 to facilitate resource provisioning based on wireless network virtualization. As shown, the NTOs 1122, 1124 operate radio access networks (RANs). In some embodiments, the NTOs 1126, 1128 may also operate RANs. In other embodiments, the NTOs 1126, 1128 will operate wireline networks, e.g., the NTOs 1126, 1128 may be internet service providers (ISPs). In some embodiments, the controller 1170 may make provisioning decisions based on cost information provided by the NTOs 1122-1128. For example, the NTOs 1122-1128 may calculate resource costs based on, *inter alia,* current loading conditions in the network 1100, and then communicate the cost information to the controller 1170. The controller 1170 may then use the cost information to make provisioning decisions. It yet another example, the controller 1170 may perform cost estimations/calculations using historical statistics and/or current loading information provided by the NTOs 1122-1128. In one example, the NTOs 1122-1128 may provide resource cost information (e.g., resource cost tables, etc.) to the controller 1170. This resource cost information may be historical information that is reported semi-statically (e.g., weekly, monthly, etc.) to reduce overhead/congestion in the control plane of the network 1100. The controller 1170 may use the resource cost information to develop a resource cost database for modeling interference-load dependencies between virtual links in the network 1100. Additionally, the NTOs 1122-1128 may dynamically communicate current loading information (e.g., presenting loading on the radio interfaces, etc.) to the controller 1170. The controller 1170 may use the current loading information to perform provisioning in accordance with the resource cost database. For example, the controller 1170 may plug the current loading information into the interference-load functions. Thereafter, the controller 1170 may be able to project interference costs prior to making provisioning decisions. As one example, the controller 1170 may be able to determine whether projected interference costs would outweigh the benefit of transporting a new service flow over a virtual interface prior to approving a service request.

In some embodiments, a resource cost database may specify interference-load dependencies for each bin in a wireless network. The interference-load dependencies may be functions that consider various parameters, including different link load values (serving cell and neighbor cell) and different service types. Resource cost database may permit virtual simulations to be performed based on current loading/utility and variation of links. In some embodiments, central controllers make provisioning decisions (e.g., admission, path selection, etc.) based on an estimated data rate to be required by a service flow (or potential service flow) and an estimated resource availability on a given path or link. The required data rate of a service flow can be estimated based on, inter alia, a service type associated with the service flow and a service history (e.g., current or past data rates, etc.) of the service flow. Resource availability may be quantized (for database entries), and can include parameters accounting for neighboring network traffic density distributions.

Load/utility based resource usage functions for each bin can be provided beforehand (e.g., generated from offline evaluations) to a controller for different link load values (serving cell and neighbor cell) and different service types. Resource usage to cost conversion functions may also be provided by NTOs. Links provide current loading information at regular intervals. NTOs use the current loading information to update cost function parameters and databases.

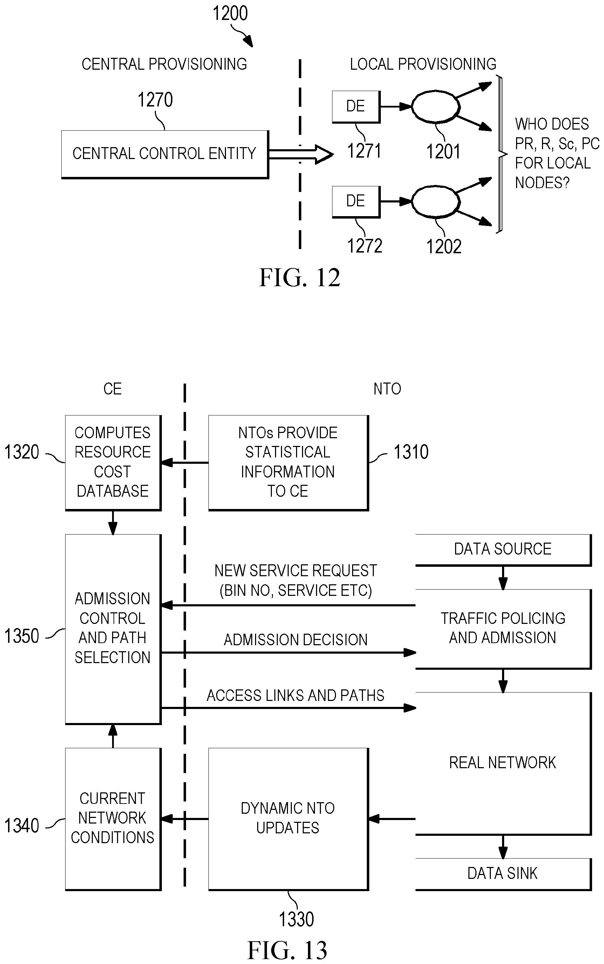

Techniques of this disclosure can be performed (partially or entirely) by distributed entities. FIG. 12 illustrates a network architecture 1200 in which one or more tasks of a central control entity 1270 are performed by distributed entities 1271, 1272, which may be positioned near (or in) networks segments 1201, 1202. In one example, the central control entity 1270 gathers resource cost data from the networks 1201, 1202, computes a resource cost database based on the resource cost data, and distributes the resource cost database to the distributed entities 1271, 1272 for use in local provisioning. In some embodiments, the central control entity 1270 may also collect dynamic network loading information for the networks 1201, 1202, and distribute the dynamic loading information to the distributed entities 1271, 1272 for use in local provisioning. The interval in which dynamic loading information is distributed between distributed entities 1271, 1272 may be adjusted based on network conditions. For example, the interval can be lengthened (e.g., less frequent data exchanges) in slow-changing networks to reduce overhead and/or processing. Alternatively, the interval can be shortened (e.g., more frequent data exchanges) in fast-changing networks to increase prediction accuracy. Resource provisioning can also be sub-divided between the central control entity 1270 and distributed entities 1271, 1272, with some resource provisioning tasks/decisions being performed centrally, and others being performed locally. For example, admission control (AC) could be performed locally to reduce call set-up time, while routing policy decisions could be centrally. Any resource provisioning decision can be performed in a central or distributed manner depending on the configurations of the network, including (for example) probabilistic routing (PR) (e.g., the percentage of traffic distributed to each shared path), scheduling (sc), etc. In some embodiments, traffic policing may be performed in a distributed manner. In other embodiments, traffic policing may be inherent to AC.

FIG. 13 illustrates a protocol diagram for an embodiment communications sequence 1300 between a central entity and one or more NTOs. As shown, the communications sequence 1300 begins with step 1310, where the NTOs communicate statistical information to the CE. In some embodiments, the statistical information includes bin-based resource cost data obtained from real-world data or simulations. Next, the communications sequence 1300 proceeds to step 1320, where the CE computes a resource cost database based on the statistical information provided by the NTOs. The resource cost database may specify interference costs as a function of loading on virtual radio interfaces in the network.

Thereafter, the communications sequence 1300 proceeds to step 1330, where the NTOs report dynamic updates to the central entity. The dynamic updates may include various real-time network parameters, such as loading, traffic patterns, latency, interference, and other information pertaining to the networks operated by the NTOs. Subsequently, the communications sequence 1300 proceeds to step 1340, where the central entity evaluates the current networks conditions in accordance with the dynamic updates provided by the NTOs. Thereafter, the communications sequence 1300 proceeds to step 1350, where the central entity makes admission and path selection for the network based on the resource cost database, the current network condition evaluation, and new service requests received by the NTOs.

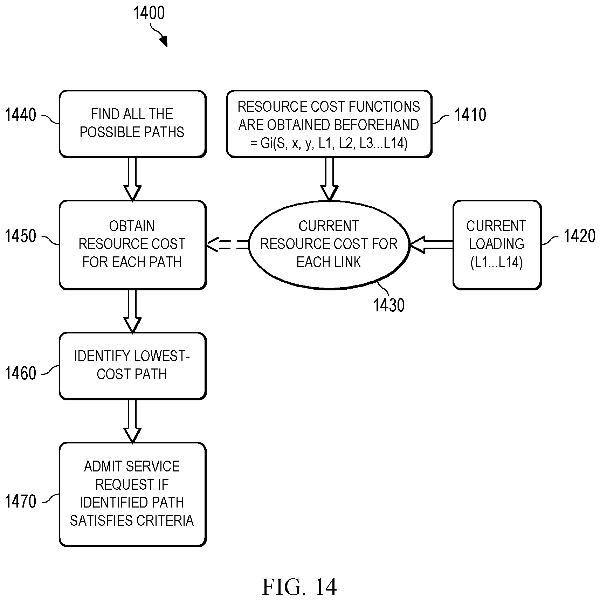

Aspects of this disclosure provide admission control and path selection techniques that utilize resource cost estimates to achieve more efficient network resource allocation. FIG. 14 illustrates an embodiment method 1400 for performing admission control and path selection. As shown, the method 1400 begins with step 410, where resource cost functions are obtained. Thereafter, the method 1400 proceeds to step 420, where current loading information for the network is obtained. Subsequently, the method 1400 proceeds to step 1430, where current resource cost for each link is computed based on the resource cost functions and the current loading information. Next, the method 1400 proceeds to step 1440, where all possible paths for satisfying a service request are found. Thereafter, the method 1400 proceeds to step 1450, where a total resource cost for each path is obtained. A total resource cost for a path may be obtained by summing the current resource cost for each link in the path. Subsequently, the method 1400 proceeds to step 1460, where the lowest-cost path is identified. Thereafter, the method 1400 proceeds to step 1470, where the service request is admitted if the identified path satisfies a predefined criteria. The predefined criteria may require that the cost of the path is less than a threshold. Alternatively, the predefined criteria may require that the overall costs of network resources for a corresponding time interval is less than a threshold. Other predefined criteria are also possible.

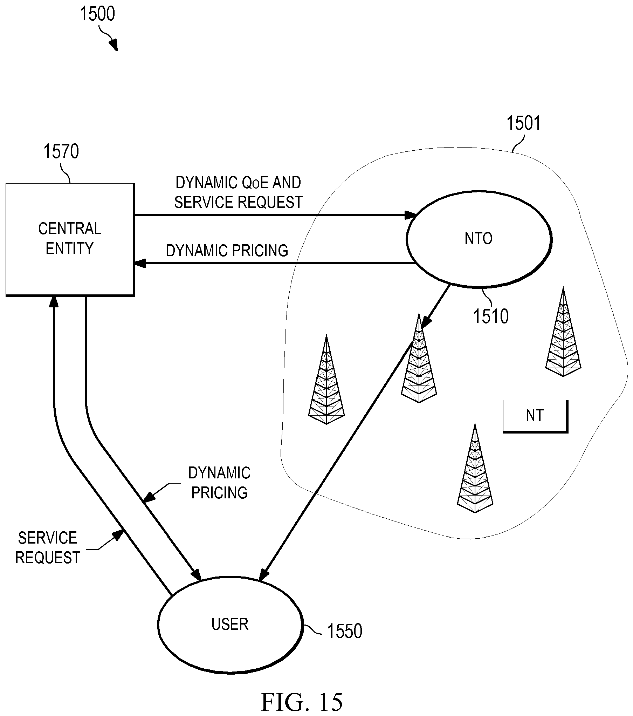

In some embodiments, dynamic resource pricing (e.g., a price to be paid for using network resources) can be set based on resource cost estimations. The dynamic setting and/or updating of resource pricing can be coordinated by central entities. FIG. 15 illustrates a network architecture 1500 in which a central entity 1570 coordinates pricing of resources in a network 1501 between an NTO 1510 and a user 1550. The pricing may be adjusted based on resource availability and/or QoS requirements.

Aspects of this disclosure provide techniques for obtaining a cost function for predicting a cost of adding a service to a link.

Adding a service, session, or flow to a particular link may have an impact of the resource usage in the neighboring links. Specially, this would happen in the case of wireless links due to the interference a transmission could cause to the neighboring links. An embodiment algorithm is described as follows. A database tracks resource usage increase due to an addition of a new service to a link. The resource usage increase (which reflects the load increase) in a j^{th}neighbor due to the addition of a session on link I is denoted as ΔL(i,j), and is evaluated offline and stored in the database. The database may also cover the cost when i = j, which provides the load increase in the assigned cell itself. Note that the load increase for other cells depends on bin location, service type and the load vector which includes the current load of the assigned cell (i^{th} cell) and the load of all the neighbor cells. The aggregate load increase can be donated as follows: [Δ*L*(*i,* 1), Δ*L*(*i,*2) ... Δ*L*(*i, Nᵢ*)] = *R*ᵤ(*bin*, *assignedLink, serviceType, loadVector*)*.*

Once this load increase is known from the database, the cost function of the link j, R_{cj}(.) could be used to evaluate the cost of increased load in that link as follows:
*Cost of load increase in jth link = R_{cj}* (Δ*L*(*i,j*) + *load*(*j*)) - *R_{cj}* (*load*(*j*))*.* R_{cj}(.) can be an increasing convex function in order to account for future possibility of admitting additional users to the link. When adding this cost for all the neighbors of the assigned link i, it is possible to obtain the total cost of the session assignment to link i using the following formula: *Cₗᵢₙₖ* (i) = *Σ_{αll j} in ith neighbour list* [*R_{cj}*(Δ*L (i,j)* + *load*(*j*)) - *R_{cj}* (*load*(*j*))]. Thereafter, the total cost of assigning a given session to a path k could be obtained by adding the cost of individual links in that path using the formula: *Cₚₐₜₕ*(*k*) = Σ_{*i* =} *_{all links in route k} C*(*i*). Finally, the route/path with minimum cost can be selected as the least cost route for that service. In cases where the database contains actual cost values (taking the impacts to the neighbors as well), evaluation for CBRAC can be simplified by adding the cost of individual links. When resource usage increase data is provided by the NTOs, the system becomes more flexible without changing the database entries, as the NTO can change the resource usage to cost conversion function depending on the situation (e.g. for competitive needs).

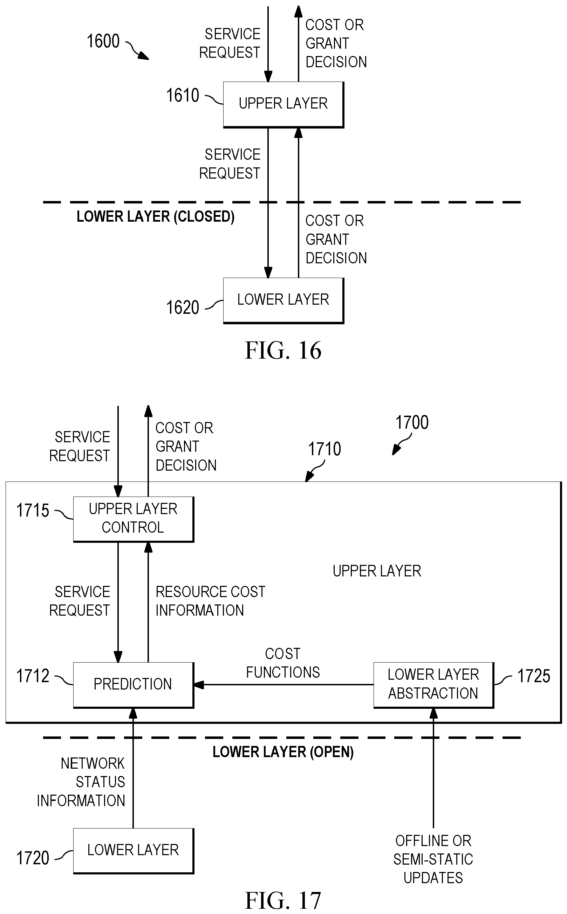

Network layer abstraction can be used to increase provisioning efficiency. Absent abstraction, admission control decisions may be performed at the lowest layer. FIG. 16 illustrates a network architecture 1600 for admission control in which an upper layer 1610 (e.g., a central entity) communicates service requests to a lower layer 1620 (e.g., an NTO) for approval. In this example, the lower layer 1620 remains completely closed (e.g., not distribute dynamic internal information).

It may be inefficient for each respective NTO to remain in complete control of user admission, particularly in cases where a central entity is interacting with (e.g., negotiating, etc.) a large number of NTOs. Specifically, call setup times may experience significant delays due to the latency involved in communicating request and grant information between the central entities and the NTOs.

Aspects of this disclosure may reduce these delays through abstraction. FIG. 17 illustrates a network architecture 1700 for admission control in which an upper layer 1710 performs admission control based on dynamic and static information retrieved from a lower layer 1720. As shown, the upper layer 1720 includes a prediction module 1712, a control module 1715, and a lower layer abstraction module 1725. The lower layer abstraction module 725 retrieves resource cost information from the lower layer 720 via offline or semi-static updates, consolidates the resource cost information (e.g., builds resource cost database, etc.), and provides corresponding cost functions to the prediction module 1712. The prediction module 1712 retrieves dynamic network status information from the lower layer 1720, which is used to estimate resource cost information for service requests received from the control module 1715. The resource cost information is forwarded to the control module 1715, where the resource cost information is used to make admission control decisions.

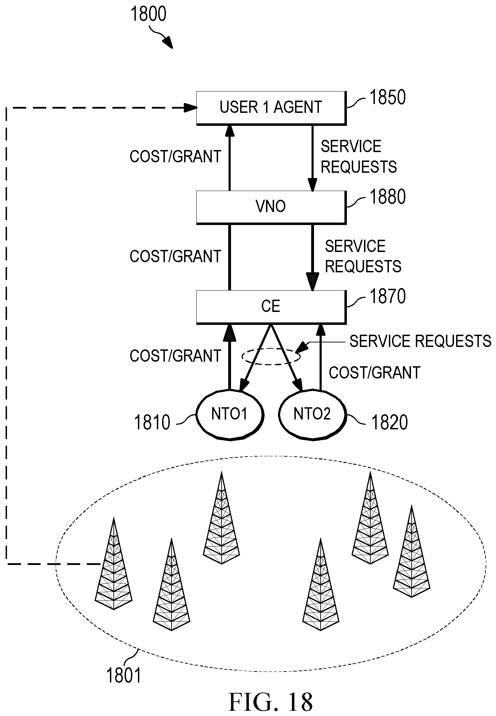

In some networks, central entities may simply facilitate the distribution of loading information to different network operators. FIG. 18 illustrates a network architecture 1800 in which admission control is performed by NTOs 1810 and 1820 of a network 1801. As shown, the central entity 1870 and virtual network operator 1880 merely relay the service requests and cost/grant decisions between the user agents 1850 and the NTOs 1810 and 1820, which may result in provisioning inefficiencies, e.g., delayed session establishment, etc. These provisioning inefficiencies can be avoided and/or reduced through network abstraction.

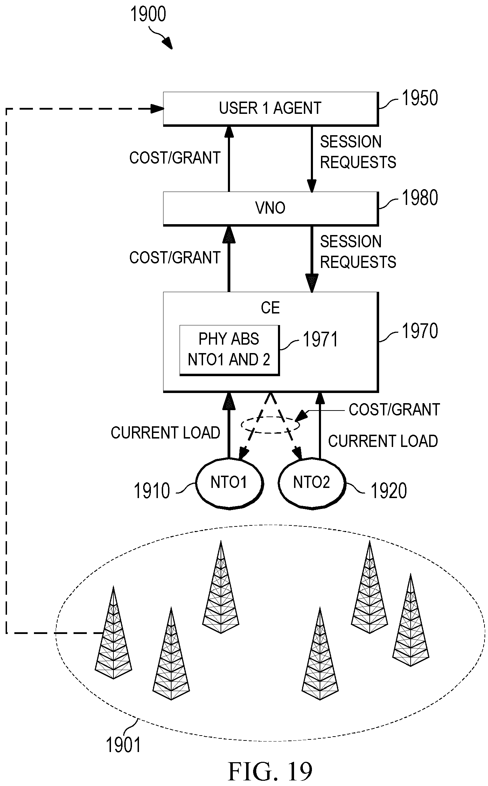

FIG. 19 illustrates a network architecture 1900 in which admission control for a wireless network 1901 is performed by a central entity 1970. Notably, the central entity 1970 includes a network abstraction module 1971 for the NTOs 1910 and 1920, which may store/retrieve dynamic loading information and/or a resource cost data for the wireless network 1901. As shown, the VNO 1980 relays service requests from the user agent 1950 to the central entity 1970. The central entity 1970 generates cost/grant decisions, which are distributed to the NTOs 1910, 1920. In some embodiments, the cost/grant decisions may include flow information (e.g., QoS requirements of service flow). The central entity 1970 also distributes the cost/grant decisions to the VNO 1980, which relays the cost/grant decisions to the user agent 1950.

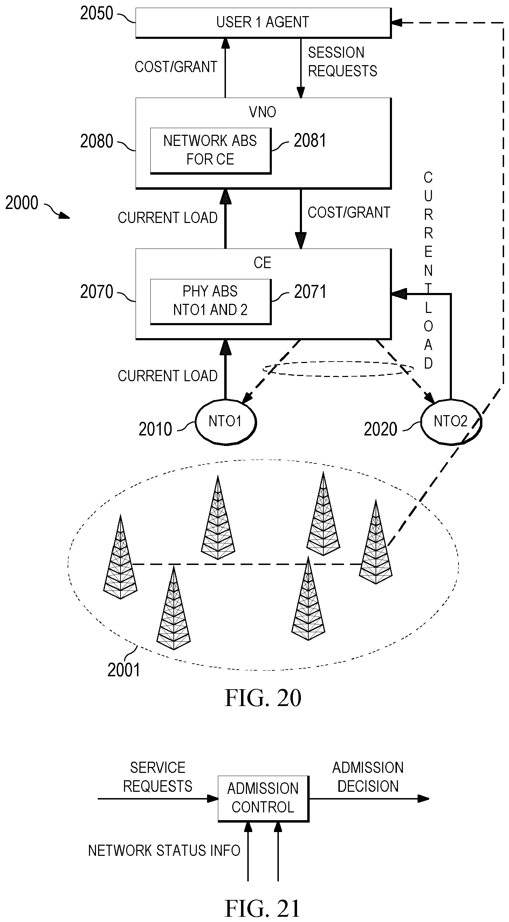

Provisioning efficiency may be further improved by network abstraction between a central entity and a virtual network operator. FIG. 20 illustrates a network architecture 2000 in which admission control for a wireless network 2001 is performed by a virtual network operator 2080. Notably, the virtual network operator 2080 includes a network abstraction module 2081 for the CE 2070, and the central entity 2070 includes a network abstraction module 2071 for the NTOs 2010 and 2020. The VNO 2080 responds to service requests from the user agent 2050.

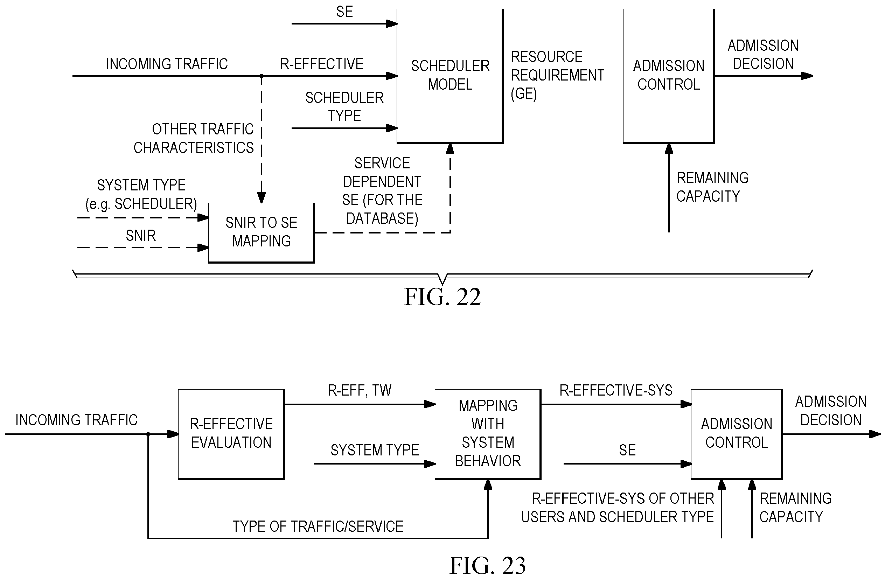

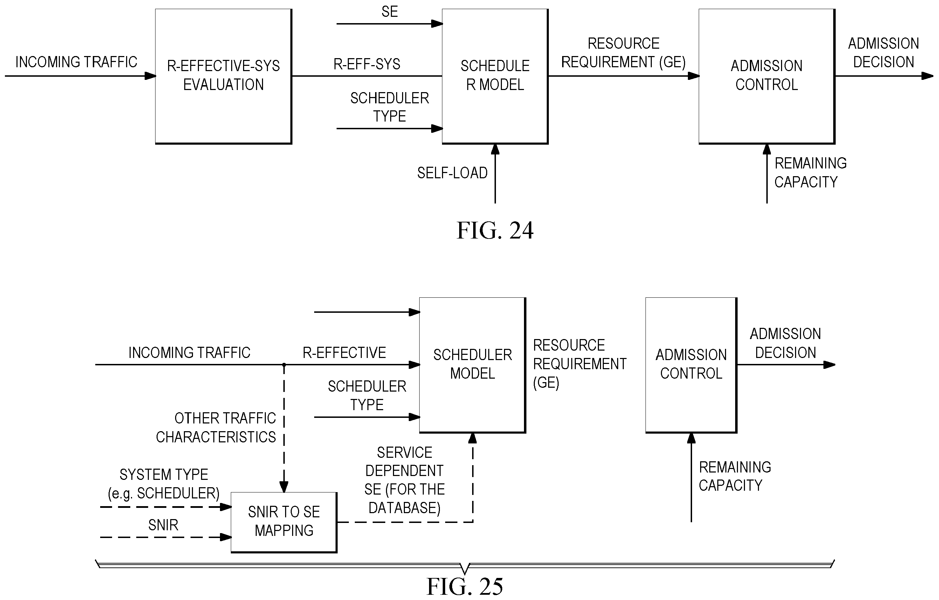

Aspects of this disclosure provide various architectures for performing admission control. FIG. 21 illustrates a diagram of an admission controller that generates admission decisions based on service requests. The service request may specify path information (e.g., resource efficiency, path loss, etc.) and a bin location of the requesting mobile device. In the event that multiple paths/APs are available, the service request may specify path information for each path/AP. The admission control unit may also receive network status information (e.g., spectral efficiency of other users, interference, loading, remaining capacity, etc.) from the network. FIG. 22 illustrates an embodiment admission control system that estimates resource requirements for service requests prior to making admission control decisions. FIGS. 23-25 illustrate embodiment admission control systems that estimates the spectral efficiency of the network prior to making admission control decisions. When a session request arrives depending on the service type and the system characteristics the spectral efficiency might change. Therefore, the spectral efficiency will not only be a function of the geolocation and the neighbor loading, buy also a function of the service type of existing flows and/or new service sessions. This can be captured by the central controller using a special scheduler modeling or full service based database. System behavior captured in the database may be referred to as R-effective-Sys. For admission control, the resource requirement can be directly evaluated by knowing the spectral efficiency (SE) and the R-effective-sys. FIG. 24 illustrates how a scheduler model is passed to the central controller. As shown, the serving cell loading may be an input to the scheduler model. In Figure 25, the SNIR is provided as the input and the SE is evaluated based on the system type, R-effective and the scheduler type.

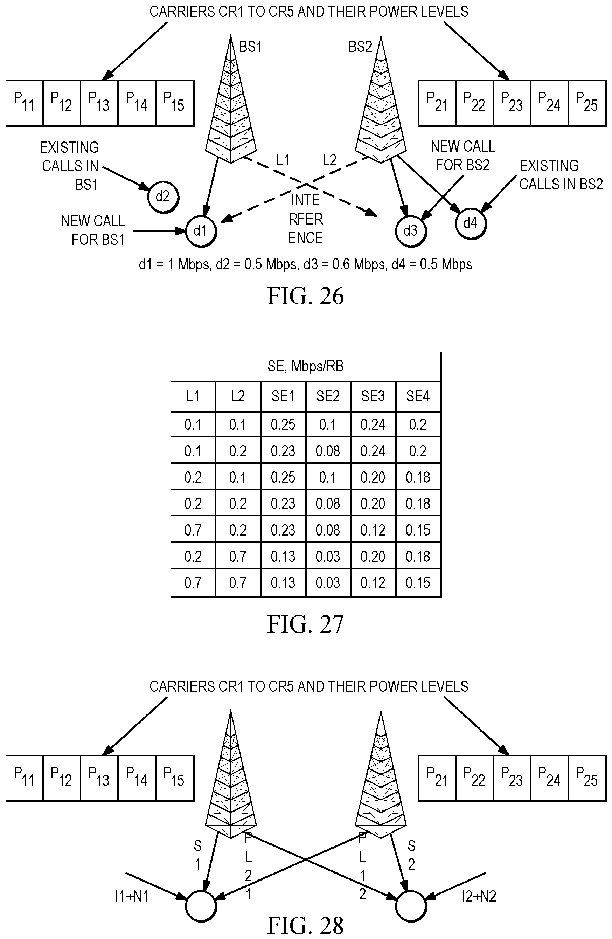

Aspects of this disclosure provide resource cost databases that correlate spectral efficiency (SE) on a link to loading on surrounding links. FIG. 26 illustrates an embodiment network for which a resource cost database is computed, and FIG. 27 illustrates the resource cost database portion for the network depicted in FIG. 26. As shown, different spectral efficiencies (SE1, SE2, SE3, SE4) for links/traffic flows (d1, d2, d3, d4) are associated with different load values (LI, L2) of the geographic bin. The load value L1 may correspond to an existing load on a link associated with BS1, and the load value L2 may correspond to an existing load on a link associated with BS2. Notably, the spectral efficiencies tend to decrease as the load values LI, L2 increase.

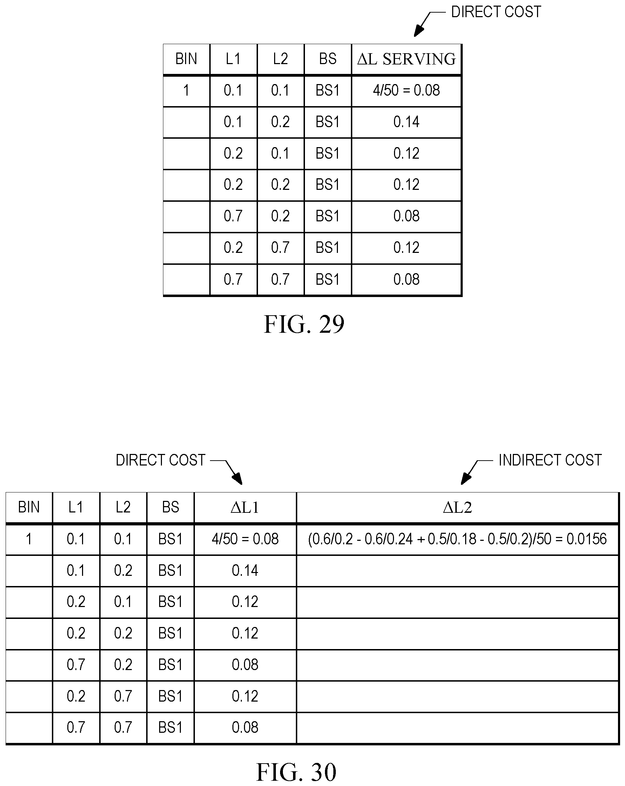

Aspects of this disclosure provide resource cost databases that compute direct and indirect interference costs of transporting additional traffic on a link. FIG. 28 illustrates an embodiment network for which a resource cost database is computed, and FIGS. 29-30 illustrate portions of a resource cost database for the network depicted in FIG. 28. As shown in FIG. 29, a direct cost (ΔL1) for transporting additional traffic over a first link varies based on existing load values (LI, L2) of the geographic bin. As shown in FIG. 30, an indirect cost (ΔL2) for transporting additional traffic over the first link also varies based on existing load values (LI, L2) of the geographic bin.

The following references are related to subject matter of the present application. [1] Abstract - Cost-based admission control for Internet Commerce QoS enhancement available at http://www.sciencedirect.com/science/article/pii/S1567422308000604 (no access to full paper); [2] "Integrated Cost-Based MAC and Routing Techniques for Hop Count Forwarding in Wireless Sensor Networks" Michele Rossi, Member, IEEE, and Michele Zorzi, Fellow, IEEE; [3] "Quality of Service Routing in Ad-Hoc Networks Using OLSR", Ying Ge et. al. CRC, Proceedings of the 36th Hawaii International Conference on System Sciences (HICSS'03); [4] "Cost-based routing", Ying Ge et al., available at http://www.crc.gc.ca/en/html/manetsensor/home/research_area/costbased_routing;"A Scalable Solution to Minimum Cost Forwarding in Large Sensor Networks"; [6] "Least-cost routing" Wikipedia, http://en.wikipedia.org/wiki/Least-cost_routing; [7] Mostafa Zaman Chowdhurya, Yeong Min Janga, and Zygmunt J. Haasb, Department of Electronics Engineering, Kookmin University, Korea "Call Admission Control based on Adaptive Bandwidth Allocation for Multi-Class Services in Wireless Networks", Wireless Networks Lab, Cornell University, Ithaca, NY, 14853, U.S.A*;* [8] "Minimum cost traffic Shaping: A user's perspective on connection admission control", Matthias Falkner, Michael Davetsikiotis, Ioannis Lambadaris, Carleton University.

One example of this disclosure is summarized as follows: For a service to be accepted, all the possible paths through the network is first found (this is knowing the available links and their topology). The cost of each link in the path is evaluated using the current link loading and the Resource Cost Function of that link. The sum of the link costs for each path is found and the minimum cost path is found. The costs could be weighted by the energy saving algorithms and make the decision. For example, to keep one node active, there should be step-wise price increase. Alternatively, the admission is done based on the total cost and internally the network operator choose to send them in another link if total traffic could be managed by a single path. A session is to be admitted by a remote controller by only knowing the current loading of each associated link in a selected path.

Aspects of this disclosure may include Resource Cost Tables (RCTs), which may be described as follows: A NTO could provide the RCT based on the assessment of the amount of resources needed for various flows based on location/SNIR and the business aspect of the value of resources based on the loading. An RCT may be a long-term matrix and (may be developed using self-learning) and only updated occasionally (e.g., when user distribution changes). An RCT may be a function of: Flow attributes (e.g. QoS, flow priority); Loading of the node and adjacent nodes (if the link is a backhaul link loading at both nodes); If the link is a shared point to multi-point radio link the node locations; The impact of the flows adding to the links in the same or adjacent coverage areas.

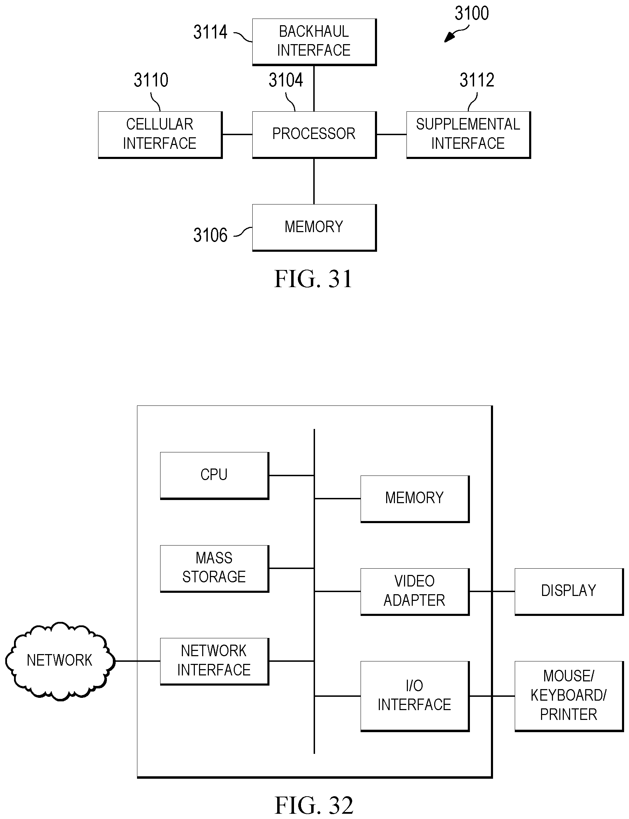

FIG. 31 illustrates a block diagram of an embodiment of a communications device 3100, which may be equivalent to one or more devices (e.g., UEs, NBs, etc.) discussed above. The communications device 3100 may include a processor 3104, a memory 3106, a cellular interface 3110, a supplemental interface 3112, and a backhaul interface 3114, which may (or may not) be arranged as shown in FIG. 31. The processor 3104 may be any component capable of performing computations and/or other processing related tasks, and the memory 3106 may be any component capable of storing programming and/or instructions for the processor 3104. The cellular interface 3110 may be any component or collection of components that allows the communications device 3100 to communicate using a cellular signal, and may be used to receive and/or transmit information over a cellular connection of a cellular network. The supplemental interface 3112 may be any component or collection of components that allows the communications device 3100 to communicate data or control information via a supplemental protocol. For instance, the supplemental interface 3112 may be a non-cellular wireless interface for communicating in accordance with a Wireless-Fidelity (Wi-Fi) or Bluetooth protocol. Alternatively, the supplemental interface 3112 may be a wireline interface. The backhaul interface 3114 may be optionally included in the communications device 3100, and may comprise any component or collection of components that allows the communications device 3100 to communicate with another device via a backhaul network.

FIG. 32 is a block diagram of a processing system that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input/output devices, such as a speaker, microphone, mouse, touchscreen, keypad, keyboard, printer, display, and the like. The processing unit may include a central processing unit (CPU), memory, a mass storage device, a video adapter, and an I/O interface connected to a bus.

The bus may be one or more of any type of several bus architectures including a memory bus or memory controller, a peripheral bus, video bus, or the like. The CPU may comprise any type of electronic data processor. The memory may comprise any type of system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

The mass storage device may comprise any type of storage device configured to store data, programs, and other information and to make the data, programs, and other information accessible via the bus. The mass storage device may comprise, for example, one or more of a solid state drive, hard disk drive, a magnetic disk drive, an optical disk drive, or the like.

The video adapter and the I/O interface provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not shown) may be used to provide a serial interface for a printer.

The processing unit also includes one or more network interfaces, which may comprise wired links, such as an Ethernet cable or the like, and/or wireless links to access nodes or different networks. The network interface allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

While this invention has been described with reference to illustrative examples, this description is not intended to be construed in a limiting sense. For example, when there are cooperative transmissions, the percentage of traffic for each path need to be used when evaluating the resource cost for a given service.

## Claims

1. A method for providing a resource cost database for a wireless network based on wireless network virtualization, the method comprising:
identifying (610), by a controller, virtual links in a wireless network (200), the virtual links including at least a first virtual link corresponding to a first radio interface and a second virtual link corresponding to a second radio interface, wherein the first radio interface and the second radio interface are available for carrying traffic in the wireless network (200);
obtaining (620), by the controller, resource cost data of the wireless network (200) for modeling interference-load dependencies between the virtual links in the wireless network; and
generating (630), by the controller, a resource cost database for resource provisioning based on wireless network virtualization in accordance with the resource cost data, the resource cost database specifying an interference cost on the first virtual link as a function of loading on the second virtual link, wherein the resource cost database is configured to be used for provisioning resources in the wireless network (200), wherein the interference cost corresponds to a reduction in spectral efficiency on the first virtual link as a result of a traffic load carried over the second virtual link.

2. The method of claim 1, wherein the first radio interface and the second radio interface are associated with different access points (201).

3. The method of claim 1, wherein obtaining (620) the resource cost data comprises:
obtaining historical interference information for the first virtual link, the historical interference information corresponding to interference measured over the first virtual link during a first period; and
obtaining historical loading information for the second virtual link, the historical loading information corresponding to loading on the second virtual link during the first period.

4. The method of claim 3, wherein generating (620) the resource cost database for the wireless network (200) comprises:
finding a correlation between the interference measured over the first virtual link and the loading on the second virtual link.

5. The method of claim 1, wherein the resource cost data includes simulated interference information for the first virtual link and simulated loading information for the second virtual link.

6. The method of claim 1, further comprising:
distributing, by the controller, the resource cost database to at least one other network device, wherein the resource cost database is configured to be used by the at least one other network device to provision resources in the wireless network (200).

7. A controller comprising:
a processor; and
a computer readable storage medium storing programming for execution by the processor, the programming including instructions to implement actions in a method in accordance with any one of claims 1 to 6.

8. A method for provisioning resources in a wireless network based on wireless network virtualization, the method comprising:
obtaining, by a device, a resource cost database for the wireless network (200), the resource cost database specifying an interference cost on a first virtual link as a function of loading on a second virtual link, wherein the resource cost database is generated in accordance with resource cost data of the wireless network obtained for modeling interference-load dependencies between the virtual links in the wireless network; and the first virtual link corresponds to a first radio interface and the second virtual link corresponds to a second radio interface, and wherein the first radio interface and the second radio interface are available for carrying traffic in the wireless network (200); wherein the interference cost corresponds to a reduction in spectral efficiency on the first virtual link as a result of a traffic load carried over the second virtual link;
gathering network loading information for the wireless network (200), the network loading information corresponding to an initial interval; and
provisioning network resources for a subsequent interval in accordance with the network loading information and the resource cost database.

9. The method of claim 8, wherein provisioning the network resources for the subsequent interval comprises:
receiving a service request for transporting a traffic flow over the wireless network (200) during the subsequent interval;
determining that the second virtual link is capable of transporting the traffic flow;
estimating a cost of transporting the traffic flow over the second virtual link during the subsequent interval in accordance with the network loading information and the resource cost database; and
granting the service request when the estimated cost satisfies a criteria.

10. The method of claim 9, wherein estimating a cost of transporting the traffic flow over the second virtual link comprises:
estimating a reduction in spectral efficiency on at least the first virtual link as a result of interference produced from transporting the traffic flow over the second virtual link.

11. The method of claim 9, wherein estimating a cost of transporting the traffic flow over the second virtual link comprises:
estimating, in accordance with the resource cost database, a resource cost for transporting the traffic flow over the second virtual link, the estimated resource cost including a direct component and at least one indirect component,
wherein the direct component corresponds to an amount of resource required to transport the traffic flow over the second virtual link, and
wherein the at least one indirect component corresponds to a reduction in available resources on the first virtual link as a result of transporting the traffic flow over the second virtual link.

12. The method of claim 8, wherein provisioning the network resource for the subsequent interval comprises:
receiving a service request for transporting a traffic flow over the wireless network (200) during the subsequent interval;
identifying the first virtual link as a candidate for transporting the traffic flow;
estimating, in accordance with the resource cost database, an amount of required resources needed to transport the traffic flow over the first virtual link;
estimating a resource availability on the first virtual link in accordance with the network loading information and the resource cost database; and
granting the service request when the estimated amount of required resources exceeds the estimated resource availability by at least a threshold.

13. The method of claim 12, wherein estimating the amount of required resources needed to transport the traffic flow over the first virtual link comprises:
estimating the amount of required resources needed to transport the traffic flow over the first virtual link in accordance with a service type of the traffic flow.

14. The method of claim 8, wherein provisioning the network resource for the subsequent interval comprises:
receiving a service request requesting transporting of a traffic flow over the wireless network (200) during a subsequent interval;
determining that the first virtual link and a third virtual link are capable of transporting the traffic flow, wherein the third virtual link corresponds to a third radio interface of the wireless network (200);
estimating a first resource cost for transporting the traffic flow over the first virtual link in accordance with the network loading information and the resource cost database;
estimating a second resource cost for transporting the traffic flow over the third virtual link in accordance with the network loading information and the resource cost database; and
assigning the traffic flow to the first virtual link when the second resource cost exceeds the first resource cost.

15. A system comprising: a controller according to claim 7 and a device comprising:
a processor; and
a computer readable storage medium storing programming for execution by the processor, the programming including instructions to implement actions in a method in accordance with any one of claims 8 to 14.

## Patentansprüche

1. Verfahren zum Bereitstellen einer Ressourcenkostendatenbank für ein Drahtlosnetzwerk basierend auf Drahtlosnetzwerkvirtualisierung, das Verfahren aufweisend:
Identifizieren (610), durch eine Steuerung, von virtuellen Links in einem Drahtlosnetzwerk (200), wobei die virtuellen Links mindestens einen ersten virtuellen Link, der einer ersten Funkschnittstelle entspricht, und einen zweiten virtuellen Link enthalten, der einer zweiten Funkschnittstelle entspricht, wobei die erste Funkschnittstelle und die zweite Funkschnittstelle zum Befördern von Verkehr im Drahtlosnetzwerk (200) verfügbar sind;
Erhalten (620), durch die Steuerung, von Ressourcenkostendaten des Drahtlosnetzwerks (200) zum Modellieren von Interferenz-Last-Abhängigkeiten zwischen den virtuellen Links im Drahtlosnetzwerk; und
Erstellen (630), durch die Steuerung, einer Ressourcenkostendatenbank für Ressourcenbereitstellung basierend auf Drahtlosnetzwerkvirtualisierung gemäß den Ressourcenkostendaten, wobei die Ressourcenkostendatenbank Interferenzkosten auf dem ersten virtuellen Link in Abhängigkeit von Belastung auf dem zweiten virtuellen Link spezifiziert, wobei die Ressourcenkostendatenbank dazu konfiguriert ist, zum Vorsehen von Ressourcen im Drahtlosnetzwerk (200) benutzt zu werden, wobei die Interferenzkosten einer Reduktion von Spektraleffizienz auf dem ersten virtuellen Link als Ergebnis von Verkehrslast, die über den zweiten virtuellen Link befördert wird, entsprechen.

2. Verfahren nach Anspruch 1, wobei die erste Funkschnittstelle und die zweite Funkschnittstelle mit verschiedenen Zugangspunkten (201) assoziiert sind.

3. Verfahren nach Anspruch 1, wobei das Erhalten (620) der Ressourcenkostendaten aufweist:
Erhalten von historischer Interferenzinformation für den ersten virtuellen Link, wobei die historische Interferenzinformation Interferenz entspricht, die die über den ersten virtuellen Link hinweg während einer ersten Periode gemessen wird; und
Erhalten von historischer Belastungsinformation für den zweiten virtuellen Link, wobei die historische Belastungsinformation Belastung auf dem zweiten virtuellen Link während der ersten Periode entspricht.

4. Verfahren nach Anspruch 3, wobei das Erstellen (620) der Ressourcenkostendatenbank für das Drahtlosnetzwerk (200) aufweist:
Auffinden einer Korrelation zwischen der Interferenz, die über den ersten virtuellen Link hinweg gemessen wird, und der Belastung auf dem zweiten virtuellen Link.

5. Verfahren nach Anspruch 1, wobei die Ressourcenkostendaten simulierte Interferenzinformation für den ersten virtuellen Link und simulierte Belastungsinformation für den zweiten virtuellen Link enthalten.

6. Verfahren nach Anspruch 1, ferner aufweisend:
Verteilen, durch die Steuerung, der Ressourcenkostendatenbank auf mindestens ein anderes Netzwerkgerät, wobei die Ressourcenkostendatenbank zur Benutzung durch das mindestens eine andere Netzwerkgerät zum Bereitstellen von Ressourcen im Drahtlosnetzwerk (200) konfiguriert ist.

7. Steuerung, aufweisend:
einen Prozessor; und
ein maschinenlesbares Speichermedium, das Programmierung zur Ausführung durch den Prozessor speichert, wobei die Programmierung Anweisungen zum Implementieren von Aktionen in einem Verfahren nach einem der Ansprüche 1 bis 6 enthält.

8. Verfahren zum Bereitstellen von Ressourcen in einem Drahtlosnetzwerk basierend auf Drahtlosnetzwerkvirtualisierung, das Verfahren aufweisend:
Erhalten, durch ein Gerät, einer Ressourcenkostendatenbank für das Drahtlosnetzwerk (200), wobei die Ressourcenkostendatenbank Interferenzkosten auf einem ersten virtuellen Link in Abhängigkeit von Belastung auf einem zweiten virtuellen Link spezifiziert, wobei die Ressourcenkostendatenbank gemäß Ressourcenkostendaten des Drahtlosnetzwerks erstellt wird, die zum Modellieren von Interferenz-Last-Abhängigkeiten zwischen den virtuellen Links im Drahtlosnetzwerk erhalten werden;
und wobei der erste virtuelle Link einer ersten Funkschnittstelle entspricht und der zweite virtuelle Link einer zweiten Funkschnittstelle entspricht, und wobei die erste Funkschnittstelle und die zweite Funkschnittstelle zum Befördern von Verkehr im Drahtlosnetzwerk (200) verfügbar sind; wobei die Interferenzkosten einer Reduktion von Spektraleffizienz auf dem ersten virtuellen Link als Ergebnis von Verkehrslast, die über den zweiten virtuellen Link befördert wird, entspricht;
Zusammentragen von Netzwerkbelastungsinformation für das Drahtlosnetzwerk (200),
wobei die Netzwerkbelastungsinformation einem Anfangsintervall entspricht; und
Bereitstellen von Netzwerkressourcen für ein nachfolgendes Intervall gemäß der Netzwerkbelastungsinformation und der Ressourcenkostendatenbank.

9. Verfahren nach Anspruch 8, wobei das Bereitstellen der Netzwerkressourcen für das nachfolgende Intervall aufweist:
Empfangen einer Dienstanfrage zum Transportieren eines Verkehrsstroms über das Drahtlosnetzwerk (200) während des nachfolgenden Intervalls;
Bestimmen, dass der zweite virtuelle Link zum Transportieren des Verkehrsstroms fähig ist;
Schätzen von Kosten für das Transportieren des Verkehrsstroms über den zweiten virtuellen Link während des nachfolgenden Intervalls gemäß der Netzwerkbelastungsinformation und der Ressourcenkostendatenbank; und
Bewilligen der Dienstanfrage, wenn die geschätzten Kosten ein Kriterium erfüllen.

10. Verfahren nach Anspruch 9, wobei das Schätzen von Kosten für das Transportieren des Verkehrsstroms über den zweiten virtuellen Link aufweist:
Schätzen einer Reduktion von Spektraleffizienz auf mindestens dem ersten virtuellen Link als Ergebnis von Interferenz, die durch Transportieren des Verkehrsstroms über den zweiten virtuellen Link erzeugt wird.

11. Verfahren nach Anspruch 9, wobei das Schätzen von Kosten für das Transportieren des Verkehrsstroms über den zweiten virtuellen Link aufweist:
Schätzen, gemäß der Ressourcenkostendatenbank, von Ressourcenkosten für das Transportieren des Verkehrsstroms über den zweiten virtuellen Link, wobei die Ressourcenkosten eine direkte Komponente und mindestens eine indirekte Komponente beinhalten,
wobei die direkte Komponente einer Ressourcenmenge entspricht, die zum Transportieren des Verkehrsstroms über den zweiten virtuellen Link erforderlich ist, und
wobei die mindestens eine indirekte Komponente einer Reduktion von verfügbaren Ressourcen auf dem ersten virtuellen Link als Ergebnis des Transportierens des Verkehrsstroms über den zweiten virtuellen Link entspricht.

12. Verfahren nach Anspruch 8, wobei das Bereitstellen der Netzwerkressource für das nachfolgende Intervall aufweist:
Empfangen einer Dienstanfrage zum Transportieren eines Verkehrsstroms über das Drahtlosnetzwerk (200) während des nachfolgenden Intervalls;
Identifizieren des ersten virtuellen Links als einen Kandidaten zum Transportieren des Verkehrsstroms;
Schätzen, gemäß der Ressourcenkostendatenbank, einer Menge von erforderlichen Ressourcen, die zum Transportieren des Verkehrsstroms über den ersten virtuellen Link benötigt werden;
Schätzen einer Ressourcenverfügbarkeit auf dem ersten virtuellen Link gemäß der Netzwerkbelastungsinformation und der Ressourcenkostendatenbank; und
Bewilligen der Dienstanfrage, wenn die geschätzte Menge von erforderlichen Ressourcen die geschätzte Ressourcenverfügbarkeit um mindestens einen Schwellenwert übersteigt.

13. Verfahren nach Anspruch 12, wobei das Schätzen der Menge von erforderlichen Ressourcen, die zum Transportieren des Verkehrsstroms über den ersten virtuellen Link benötigt werden, aufweist:
Schätzen der Menge von erforderlichen Ressourcen, die zum Transportieren des Verkehrsstroms über den ersten virtuellen Link benötigt werden, gemäß einer Dienstart des Verkehrsstroms.

14. Verfahren nach Anspruch 8, wobei das Bereitstellen der Netzwerkressource für das nachfolgende Intervall aufweist:
Empfangen einer Dienstanfrage, die das Transportieren eines Verkehrsstroms über das Drahtlosnetzwerk (200) während eines nachfolgenden Intervalls anfordert;
Bestimmen, dass der erste virtuelle Link und ein dritter virtueller Link zum Transportieren des Verkehrsstroms fähig sind, wobei der dritte virtuelle Link einer dritten Funkschnittstelle des Drahtlosnetzwerks (200) entspricht;
Schätzen von ersten Ressourcenkosten für das Transportieren des Verkehrsstroms über den ersten virtuellen Link gemäß der Netzwerkbelastungsinformation und der Ressourcenkostendatenbank;
Schätzen von zweiten Ressourcenkosten für das Transportieren des Verkehrsstroms über den dritten virtuellen Link gemäß der Netzwerkbelastungsinformation und der Ressourcenkostendatenbank; und
Zuweisen des Verkehrsstroms an den ersten virtuellen Link, wenn die zweiten Ressourcenkosten die ersten Ressourcenkosten übersteigen.

15. System, aufweisend:
eine Steuerung nach Anspruch 7 und ein Gerät, aufweisend:
ein maschinenlesbares Speichermedium, das Programmierung zur Ausführung durch den Prozessor speichert, wobei die Programmierung Anweisungen zum Implementieren von Aktionen in einem Verfahren nach einem der Ansprüche 8 bis 14 enthält.

## Revendications

1. Procédé de fourniture d'une base de données de coût de ressource pour un réseau sans fil sur la base d'une virtualisation de réseau sans fil, le procédé comprenant les étapes consistant à :
identifier (610), par un contrôleur, des liaisons virtuelles dans un réseau sans fil (200), les liaisons virtuelles comprenant au moins une première liaison virtuelle correspondant à une première interface radio et une deuxième liaison virtuelle correspondant à une deuxième interface radio, la première interface radio et la deuxième interface radio étant disponibles pour transporter du trafic dans le réseau sans fil (200) ;
obtenir (620), par le contrôleur, des données de coût de ressource du réseau sans fil (200) pour modéliser des dépendances d'interférence/charge entre les liaisons virtuelles dans le réseau sans fil ; et
générer (630), par le contrôleur, une base de données de coût de ressource pour le provisionnement de ressources sur la base d'une virtualisation de réseau sans fil selon les données de coût de ressource, la base de données de coût de ressource spécifiant un coût d'interférence sur la première liaison virtuelle en fonction d'un chargement sur la deuxième liaison virtuelle, dans lequel la base de données de coût de ressource est configurée pour être utilisée pour provisionner des ressources dans le réseau sans fil (200), dans lequel le coût d'interférence correspond à une réduction de l'efficacité spectrale sur la première liaison virtuelle suite à une charge de trafic transportée sur la deuxième liaison virtuelle.

2. Procédé selon la revendication 1, dans lequel la première interface radio et la deuxième interface radio sont associées à différents points d'accès (201).

3. Procédé selon la revendication 1, dans lequel l'obtention (620) des données de coût de ressource comprend :
l'obtention d'informations d'interférence historiques pour la première liaison virtuelle, les informations d'interférence historiques correspondant à une interférence mesurée sur la première liaison virtuelle pendant une première période ; et
l'obtention d'informations de chargement historiques pour la deuxième liaison virtuelle, les informations de chargement historiques correspondant à un chargement sur la deuxième liaison virtuelle pendant la première période.

4. Procédé selon la revendication 3, dans lequel la génération (620) de la base de données de coût de ressource pour le réseau sans fil (200) comprend :
le fait de trouver une corrélation entre l'interférence mesurée sur la première liaison virtuelle et le chargement sur la deuxième liaison virtuelle.

5. Procédé selon la revendication 1, dans lequel les données de coût de ressource comprennent des informations d'interférence simulées pour la première liaison virtuelle et des informations de chargement simulées pour la deuxième liaison virtuelle.

6. Procédé selon la revendication 1, comprenant en outre :
la distribution, par le contrôleur, de la base de données de coût de ressource à au moins un autre dispositif de réseau, la base de données de coût de ressource étant configurée pour être utilisée par l'au moins un autre dispositif de réseau pour provisionner des ressources dans le réseau sans fil (200).

7. Contrôleur comprenant :
un processeur ; et
un support de stockage lisible par ordinateur stockant un programme à exécuter par le processeur, le programme comprenant des instructions pour mettre en oeuvre des actions dans un procédé selon l'une quelconque des revendications 1 à 6.

8. Procédé pour provisionner des ressources dans un réseau sans fil sur la base d'une virtualisation de réseau sans fil, le procédé comprenant les étapes consistant à :
obtenir, par un dispositif, une base de données de coût de ressource pour le réseau sans fil (200), la base de données de coût de ressource spécifiant un coût d'interférence sur une première liaison virtuelle en fonction d'un chargement sur une deuxième liaison virtuelle,
dans lequel la base de données de coût de ressource est générée selon des données de coût de ressource du réseau sans fil obtenues pour modéliser des dépendances d'interférence/charge entre les liaisons virtuelles dans le réseau sans fil ; et la première liaison virtuelle correspond à une première interface radio et la deuxième liaison virtuelle correspond à une deuxième interface radio, et dans lequel la première interface radio et la deuxième interface radio sont disponibles pour transporter du trafic dans le réseau sans fil (200) ; dans lequel le coût d'interférence correspond à une réduction de l'efficacité spectrale sur la première liaison virtuelle suite à une charge de trafic transportée sur la deuxième liaison virtuelle ;
recueillir des informations de chargement de réseau pour le réseau sans fil (200), les informations de chargement de réseau correspondant à un intervalle initial ; et
provisionner des ressources de réseau pour un intervalle suivant selon les informations de chargement de réseau et la base de données de coût de ressource.

9. Procédé selon la revendication 8, dans lequel le provisionnement des ressources de réseau pour l'intervalle suivant comprend :
la réception d'une demande de service pour transporter un flux de trafic sur le réseau sans fil (200) pendant l'intervalle suivant ;
la détermination que la deuxième liaison virtuelle est capable de transporter le flux de trafic ;
l'estimation d'un coût de transport du flux de trafic sur la deuxième liaison virtuelle pendant l'intervalle suivant selon les informations de chargement de réseau et la base de données de coût de ressource ; et
l'autorisation d'une demande de service lorsque le coût estimé remplit un critère.

10. Procédé selon la revendication 9, dans lequel l'estimation d'un coût de transport du flux de trafic sur la deuxième liaison virtuelle comprend :
l'estimation d'une réduction de l'efficacité spectrale sur au moins la première liaison virtuelle suite à une interférence produite par le transport du flux de trafic sur la deuxième liaison virtuelle.

11. Procédé selon la revendication 9, dans lequel l'estimation d'un coût de transport du flux de trafic sur la deuxième liaison virtuelle comprend :
l'estimation, selon la base de données de coût de ressource, d'un coût de ressource pour transporter le flux de trafic sur la deuxième liaison virtuelle, le coût de ressource estimé comprenant une composante directe et au moins une composante indirecte,
dans lequel la composante directe correspond à une quantité de ressource requise pour transporter le flux de trafic sur la deuxième liaison virtuelle, et
dans lequel l'au moins une composante indirecte correspond à une réduction des ressources disponibles sur la première liaison virtuelle suite au transport du flux de trafic sur la deuxième liaison virtuelle.

12. Procédé selon la revendication 8, dans lequel le provisionnement de la ressource de réseau pour l'intervalle suivant comprend :
la réception d'une demande de service pour transporter un flux de trafic sur le réseau sans fil (200) pendant l'intervalle suivant ;
l'identification de la première liaison virtuelle comme un candidat pour transporter le flux de trafic ;
l'estimation, selon la base de données de coût de ressource, d'une quantité de ressources requises, nécessaires pour transporter le flux de trafic sur la première liaison virtuelle ;
l'estimation d'une disponibilité de ressources sur la première liaison virtuelle selon les informations de chargement de réseau et la base de données de coût de ressource ; et
l'autorisation de la demande de service lorsque la quantité estimée de ressources requises dépasse la disponibilité de ressources estimée d'au moins un seuil.

13. Procédé selon la revendication 12, dans lequel l'estimation de la quantité de ressources requises, nécessaires pour transporter le flux de trafic sur la première liaison virtuelle comprend :
l'estimation de la quantité de ressources requises, nécessaires pour transporter le flux de trafic sur la première liaison virtuelle selon un type de service du flux de trafic.

14. Procédé selon la revendication 8, dans lequel le provisionnement de la ressource de réseau pour l'intervalle suivant comprend :
la réception d'une demande de service pour transporter un flux de trafic sur le réseau sans fil (200) pendant l'intervalle suivant ;
la détermination que la première liaison virtuelle et une troisième liaison virtuelle sont capables de transporter le flux de trafic, la troisième liaison virtuelle correspondant à une troisième interface radio du réseau sans fil (200) ;
l'estimation d'un premier coût de ressource pour transporter le flux de trafic sur la première liaison virtuelle selon les informations de chargement de réseau et la base de données de coût de ressource ;
l'estimation d'un deuxième coût de ressource pour transporter le flux de trafic sur la troisième liaison virtuelle selon les informations de chargement de réseau et la base de données de coût de ressource ; et
l'attribution du flux de trafic à la première liaison virtuelle lorsque le deuxième coût de ressource dépasse le premier coût de ressource.

15. Système comprenant :
un contrôleur selon la revendication 7 et un dispositif comprenant :
un processeur ; et
un support de stockage lisible par ordinateur stockant un programme à exécuter par le processeur, le programme comprenant des instructions pour mettre en oeuvre des actions dans un procédé selon l'une quelconque des revendications 8 à 14.
